# EUROPEAN PATENT APPLICATION

(11) **EP 2 157 750 A1**
(43) Date of publication of application: **24.02.2010**
(21) Application number: 08773072.7
(22) Date of filing: 01.07.2008
(51) Int. Cl.: H04L 12/66, H04L 29/06

(54) **IMPLEMENTATION METHOD AND SYSTEM OF RESOURCE RESERVATION,MG AND MGC**

(30) Priority: 11.07.2007 CN 200710126083
(71) Applicant: Huawei Technologies Co., Ltd., Longgang District, Shenzhen Guangdong 518129 (CN)
(72) Inventor: ZHU, Ning, Guangdong 518129 (CN)
(74) Representative: Charles, Glyndwr
(86) International application number: PCT/CN2008/071510
(87) International publication number: WO 2009/006824

(57) **Abstract**

A resource reservation method and system, a Media Gateway (MG), and a Media Gateway Controller (MGC) are provided herein to enable the MG to reserve resources under control of the MGC. The method includes the following steps: an MG receives an indication from an MGC, where the indication instructs the MG to send a first Resource Reservation Protocol (RSVP) message to a data stream receiver; and the MG constructs the first RSVP message according to the indication, and sends the RSVP message to the data stream receiver. With the present invention, the MG reserves and releases resources on the bearer path as instructed by the MGC, and this ensures the QoS of the media streams sent by the MG in the IP transport network.

## Description

### Field of the Invention

The present invention relates to a communication technology, and in particular, to a resource reservation method and system, a Media Gateway (MG), and a Media Gateway Controller (MGC).

### Background of the Invention

To fully share network resources and simplify equipment upgrade and service extension, a Packet-Switched (PS) network separates the call control plane from the service bearer plane, for example, divides a media gateway into two parts: an MGC and an MG. The MGC is responsible for call control and the MG is responsible for service bearing. In this way, the costs of development and maintenance are drastically reduced.

The MG communicates with the MGC through a media gateway control protocol. The currently prevalent media gateway control protocols include the H.248/MeGaco ("H.248") and the Media Gateway Control Protocol (MGCP) put forward by the Internet Engineering Task Force (IETF). The MGCP version 1 was developed by the IETF in October 1999, and revised in January 2003. The H.248 protocol comes in many versions. The H.248 version 3 was developed by the International Telecommunications Union (ITU) in September 2005. Concepts related to H.248 are described below, taking the H.248 version 3 as an example.

In the H.248 protocol, various resources on the MG are expressed as terminations abstractly. Terminations are categorized into physical terminations and ephemeral terminations. Physical terminations are physical entities characterized by semi-permanent existence, for example, Time Division Multiplex (TDM) channels. Ephemeral terminations are public resources requested for a temporary purpose and released after use, for example, Real-time Transport Protocol (RTP) streams. A root termination represents the entirety of the MG. The associations between terminations are abstractly represented by contexts. A context may include multiple terminations. Thus, a topology is used to describe the relationship between the terminations. Terminations that are not associated with other terminations are included in a null context.

Based on the abstract model of the H.248 protocol, call continuity is actually an operation on a termination and a context. Such operations are performed through command requests and replies between the MGC and the MG. Command types include: Add, Modify, Subtract, Move, AuditValue, AuditCapabilities, Notify, and ServiceChange. Command parameters, also known as descriptors, are categorized into property, signal, event, and statistic. Parameters with service relevancy are aggregated into a package logically.

In an IP network, data streams are generally transmitted in best-effort mode, which is enough for most services. The transmission of media streams (especially audio media streams) in a PS network is very common now, and attracts more and more attention from people. However, when the MGC and the MG are in the IP network, it is impossible to ensure the media stream transmission quality on the bearer path between the MG and the media stream receiver, thus restricting the application scope of the MGC and the MG.

### Summary of the Invention

Embodiments of the present invention provide a resource reservation method and system, an MG, and an MGC to ensure media stream transmission quality on the bearer path between the MG and the media stream receiver.

A resource reservation method provided in an embodiment of the present invention includes:
by an MG, receiving an indication from an MGC, where the indication instructs the MG to send a first Resource Reservation Protocol (RSVP) message to a data stream receiver; and
constructing, by the MG, the first RSVP message according to the indication, and sending the RSVP message to the data stream receiver.

A resource reservation system provided in an embodiment of the present invention includes:
an MG, adapted to: receive an indication from an MGC, construct a first RSVP message according to the indication, and send the RSVP message to a data stream receiver; receive a second RSVP message, and report information in the second RSVP message to the MGC through a preset event; and
the MGC, adapted to: deliver an indication to the MG, where the indication instructs the MG to send the first RSVP message to the data stream receiver; and receive the event reported by the MG, where the event carries the information in the second RSVP message received by the MG.

An MG provided in an embodiment of the present invention includes:
a first receiving unit, adapted to receive an indication from an MGC, where the indication instructs a sending unit to send a first RSVP message to a data stream receiver;
a generating unit, adapted to generate the first RSVP message according to the indication received by the first receiving unit; and
the sending unit, adapted to send the first RSVP message generated by the generating unit to the data stream receiver.

An MGC provided in an embodiment of the present invention includes:
an indication generating unit, adapted to generate an indication that carries an H.248 signal and/or a property and instructs an MG to send a first RSVP message to a data stream receiver; and
a delivering unit, adapted to deliver the indication generated by the indication generating unit to the MG.

In the embodiments of the present invention, the MG receives the indication from the MGC, constructs the first RSVP message and sends the RSVP message; and the network entity that receives the first RSVP message performs operations of reserving resources. Therefore, the bearer path between the MG and the data stream receiver can be set up and torn down in the IP network; the resources on the bearer path can be reserved and released; the transmission quality of media streams sent by the MG in the IP transport network is ensured; and the user's requirements for the Quality of Service (QoS) of the service streams corresponding to the media streams are fulfilled.

### Brief Description of the Drawings

FIG. 1 illustrates a resource reservation method when an MG serves as a sender in a second embodiment of the present invention;
FIG. 2 illustrates a resource reservation method when an MG serves as an intermediate node in a third embodiment of the present invention; and
FIG. 3 illustrates a resource reservation system in a fourth embodiment of the present invention.

### Detailed Description of the Embodiments

To help those skilled in the art understand and implement the present invention, the following describes the embodiments of the present invention with reference to accompanying drawings.

In the embodiments of the present invention, the MGC uses an extended media gateway control protocol to control the MG to construct and send an RSVP message (the first RSVP message); the network entity (such as a router in the IP network, or a data stream receiver) that receives the first RSVP message performs operations of reserving resources (for example, setting up and teardown of the bearer path, and reservation and release of resources). In this way, the bearer path between the MG and the data stream receiver in the IP network can be set up and torn down, and the resources can be reserved and released. The extended media gateway control protocol includes an extended signal. Through the extended signal, the MGC instructs the MG to send the first RSVP message, which may be one of the following messages: a Path message, which is adapted to set up a data stream path and carry Quality of Service (QoS) information; a PathTear message, which is adapted to tear down a path and release resources; a ResvErr message, which is adapted to notify the data stream receiver that the resource reservation fails; and a ResvConf message, which is adapted to confirm the Resv message. The first RSVP message may be any other Resv message sent by the MG. The extended signal may include parameters that carry the contents of the corresponding RSVP message. The functions performed by the signals above may also be implemented through properties of H.248. The extended media gateway control protocol further includes an extended event. Through the extended event, the MG detects the information in the following RSVP messages (the second RSVP message) (the information may include only the type of the second RSVP message, or may further include the contents of the second RSVP message): a Resv message, which is sent from the data stream receiver or an intermediate node and adapted to implement the action of resource reservation on each node; a ResvTear message, which is adapted to release the resources reserved through the Resv message; a PathErr message, which is adapted to notify the data stream sender that the path setting up fails. In such messages, the first RSVP message and the second RSVP message jointly implement the process of setting up and removing the path, and the process of reserving and releasing the resources. In the embodiments given below, the first embodiment deals with a process of extending a media gateway control protocol, the second embodiment and the third embodiment deal with a method for setting up and tearing down a bearer path, and a method for reserving and releasing resources on the bearer path (such as the MG), and the fourth embodiment deals with an apparatus for setting up a bearer path and reserving resources.

The RSVP soft state is maintained through a timer on each router so that the resources of routers can be fully used. When the router receives a Path message and/or a Resv message, the soft state is refreshed. When the timer times out, the reserved resources are released, or the path is also torn down. To maintain the bearer path and the reserved resources on each router (including the MG), the MG may send a relevant message (such as a Path message and/or a Resv message) as instructed by the MGC, or may have an automatic response mechanism. For example, in the case that the resource has been allocated and the path has been created, if the same Resv message that does not change the resource reservation is received, the MG may set an automatic response mechanism. Besides, the Path message may also be sent periodically to maintain or refresh the soft state on the routers along the route. The MGC may use a signal to indicate sending of each Path message or instruct the MG to send the Path message automatically at intervals.

### Embodiment 1

This embodiment deals with the extension of the media gateway protocol (such as the H.248) so that the MG supports setting up and teardown of a bearer path and supports reservation and release of resources under control of the MGC. The bearer path is adapted to bear the application data streams in the RSVP protocol (RFC 2205). The MGCP protocol may be extended in the same way so that the MG supports setting up and teardown of a bearer path and supports reservation and release of resources under control of the MGC.

The H.248 protocol is extended by adding new signals, events and properties. Therefore, the H.248 protocol enables the MG to set up and tear down a bearer path, and reserve and release resources under control of the MGC; as a node on the bearer path, the MG ensures the media stream transmission quality and improves the user experience. The H.248 protocol extended below is adapted to set up and tear down the path between the MG and the data stream receiver, and to reserve and release resources. The extended H.248 protocol combines with other RSVP-enabled hosts and routers in the existing network to implement QoS of a complete centralized service model. If the MG serves as a data stream receiver or a receiving node to perform the RSVP function, the H.248 protocol also needs to be extended.

The signals, events and properties extended in the H.248 protocol may be put into the same package or distributed in different packages. In this embodiment, for ease of management, the extended signals, events and properties make up an RSVP package. The RSVP package includes the following contents:

### 1. Signal

Through the signal, the MGC instructs the MG to send an RSVP message. The RSVP message may carry some objects. The contents of such objects may be written by the MG according to its configuration or stored information, or specified by the MGC in the form of signal parameters. The parameters may be defined flexibly in practice. The contents included in certain object fields may be defined separately through parameters, or defined by the MGC as an entirety. This signal may be delivered to an IP termination on the MG, or to a ROOT termination on the MG. Given below are examples of the signal.
(1) pth signal: Through this signal, the MGC instructs the MG to send an Rsvp Path message. The parameters carried in this signal are described in detail in Table 1.
(2) ptht signal: Through this signal, the MGC instructs the MG to send an Rsvp PathTear message. The parameters carried in this signal are described in detail in Table 2.
(3) rsverr signal: Through this signal, the MGC instructs the MG to send an Rsvp ResvErr message. The parameters carried in this signal are described in detail in Table 3.
(4) rsvconf signal: Through this signal, the MGC instructs the MG to send an Rsvp ResvConf message. The parameters carried in this signal are described in detail in Table 4.

Through the signals listed above, the MGC instructs the MG to send a specified RSVP message. Some or all contents of the RSVP message are set in the signal parameters. Some or all contents of the signal parameters may be set on the MG, or the correlation information of parameter is set on the MG. In this way, after receiving the signal, the MG obtains the parameters automatically, without requiring the MGC to deliver the parameters.

A similar implementation method is as follows: Such signals may be combined into one signal for sending the RSVP message. The message type may be a parameter (such as rtype) of the signal. The value of the parameter is an enumerated type, and the values include: "Pth", "ptht", "rsverr", and "rsvconf", which correspond to four message types of RSVP: "Path", "PathTear", "ResvErr", and "Resvconf".

In practice, the defined signal parameters may be a little different from those specified herein; that is, some parameters may be omitted and other parameters may be added, but the rationale is the same as that of the present invention.

Some or all functions described above may be implemented through H.248 properties. For example, a property may be extended to indicate whether to set User Datagram Protocol (UDP) encapsulation.

### 2. Event

The MGC may set an event for the MG to detect the received RSVP message. A single event may be defined to detect all received RSVP messages, or a detection event is set for each different RSVP message separately. The method for setting a detection event is described below, supposing a single event is defined to detect all received RSVP messages. If this event serves as a permanent event, it is not necessary for the MGC to set the event for the MG, and the MG may detect and report the event automatically.

The following parameters are defined for the rvp event:
(1) detlst parameter: This parameter is adapted to set an RSVP message list to be detected. This list includes one or any combination of these messages: Resv, ResvTear, and PathErr. By default, the list includes all such messages.
(2) detaddr parameter: This parameter is adapted to set the address for detection. If no such address is set, the detection is performed on the local address in the local descriptor.
(3) UDPdetaddr parameter: This parameter is adapted to set the address for detecting the RSVP message encapsulated through UDP.

Some or all such event parameters may be delivered through an H.248 property.

This event may be set on the IP termination or the ROOT termination of the MG. If the event is set on the ROOT termination of the MG, because no local descriptor is set on this ROOT termination, the address for detecting and receiving the RSVP message needs to be configured, or needs to set by the MGC.

Table 5 gives details about the parameter reported in this event (namely, the ObservedEventsDescriptor parameter of the Notify message).

The event parameters defined in practice may be a little different from those specified herein; that is, some parameters in Table 4 may be omitted and some other parameters may be added, but the rationale is the same.

When the MG reports an event to the MGC, some or all event parameters described above may carry the information in some or all RSVP messages. For example, the event to be reported may carry only a msgtype (message type) parameter.

The signals and events described above may be adapted to set up and tear down a bearer path for the data streams sent from the MGC, and to reserve and release resources. Such signals and events are easily extensible for the purposes of setting up and tearing down a bearer path, and reserving and releasing resources in the case that the MG serves as a data stream receiver. For example, the detlst of the rvp event may be extended to support one or any combination of these messages: Resv, ResvTear, PathErr, Path, PathTear, ResvErr, and ResvConf. Besides, other signals or signal parameters may be extended. Through the extended signals or signal parameters, the MGC instructs the MG to send an RSVP Resv message, a ResvTear message, or a PathErr message.

If the rvp event defined above is regarded as a permanent event, the detection can be performed automatically, without requiring the MGC to deliver the event in the event descriptor. If the rvp event is not a permanent event and the MGC requires the MG to detect the received RSVP message, the MGC needs to deliver this event, which instructs the MG to detect and report the message.

**Table 1 Pth signal parameters**

| **Parameter** | **Data Type** | **Content** |
|---|---|---|
| (1) session | String | This parameter describes the SESSION field of the Path message, and its contents include the destination IP address of the data stream, and the protocol type. |
| (2) phop (previous hop) | String | This parameter describes the RSVP_HOP field of the Path message, and its contents include the address of the previous hop, and may include a Logical Interface Handle (LIH). |
| (3) timevalues (refresh period) | String | This parameter describes the TIME_VALUES field of the Path message, and its contents include the value of the refresh period R. |
| (4) policydata (policy data) | String | This parameter describes the POLICY_DATA field of the Path message. |
| (5) sendertemplate (sender template) | String | This parameter describes the SENDER_TEMPLATE field of the Path message. Its contents include the sender address information. This field is part of the sender descriptor field. |
| (6) sendertspec (sender parameter) | String | This parameter describes the SENDER_TSPEC field of the Path message. Its contents include the transmission features of the sent data stream. This field is part of the sender descriptor field. |
| (7) adspec (advertisement parameter) | String | This parameter describes the ADSPEC field of the Path message. Its contents include One Pass With Advertising (OPWA) data. This field is an optional part of the sender descriptor field. |
| (8) source (source address) | String | This parameter describes the source address of the Path message. If the source address is not specified, the MG may use the local address (in the local descriptor) or configured address of the IP termination. |
| (9) dest (destination address) | String | This parameter describes the destination address of the Path message. If the destination address is not specified, the MG may use the destination address in the session property. |
| (10) udp (UDP encapsulation) | BOOL | This parameter describes whether the sent message needs UDP encapsulation. |

**Table 2 ptht signal parameters**

| **Parameter** | **Data Type** | **Content** |
|---|---|---|
| (1) session | String | This parameter describes the SESSION field of the PathTear message, and its contents include the destination IP address of the data stream, and the protocol type. |
| (2) phop (previous hop) | String | This parameter describes the RSVP_HOP field of the PathTear message, and its contents include the address of the previous hop, and may include an LIH. |
| (3) sendertemplate (sender template) | String | This parameter describes the SENDER_TEMPLATE field of the PathTear message. Its contents include the sender address information. |
| (4) sendertspec (sender parameter) | String | This parameter describes the SENDER_TSPEC field of the PathTear message. Its contents include the transmission features of the sent data stream. |
| (5) adspec (advertisement parameter) | String | This parameter describes the ADSPEC field of the PathTear message. Its contents include OPWA data. |
| (6) source (source address) | String | This parameter describes the source address of the PathTear message. If the source address is not specified, the MG may use the local address (in the local descriptor) or configured address of the IP termination. |
| (7) dest (destination address) | String | This parameter describes the destination address of the PathTear message. If the destination address is not specified, the MG may use the destination address in the session property. |
| (8) udp (UDP encapsulation) | BOOL | This parameter describes whether the sent message needs UDP encapsulation. |

**Table 3 rsverr signal parameters**

| **Parameter** | **Data Type** | **Content** |
|---|---|---|
| (1) session | String | This parameter describes the SESSION field of the ResvErr message, and its contents include the destination IP address of the data stream, and the protocol type. |
| (2) phop (previous hop) | String | This parameter describes the RSVP_HOP field of the ResvErr message, and its contents include the address of the previous hop. |
| (3) errorspec (error parameter) | String | This parameter describes the ERROR_SPEC field of the ResvErr message. Its contents include: the error that occurs, and the IP address of the node where the error occurs. |
| (4) policydata (policy data) | String | This parameter describes the POLICY_DATA field of the ResvErr message. |
| (5) style (reservation style) | enum | This parameter describes the STYLE field of the ResvErr message. Its contents include three styles: Fixed-Filter (FF), Shared-Explicit (SE) and Wildcard-Filter (WF). This parameter is described through an enumerated data type. |
| (6) errfd (error flow description) | String | This parameter describes the error flow descriptor field of the ResvErr message. The value of the content of this field varies with the reservation style. This parameter describes the content of the error flow descriptor as an entirety. Alternatively, many parameters may describe the contents of this parameter respectively. |
| (7) scope | String | This parameter describes the SCOPE field of the ResvErr message. Its content is a sender address list. |
| (8) source (source address) | String | This parameter describes the source address of the ResvErr message. If the source address is not specified, the MG may use the local address (in the local descriptor) or configured address of the IP termination. |
| (9) dest (destination address) | String | This parameter describes the destination address of the ResvErr message, actually, the address of the next-hop node. |
| (10) udp (UDP encapsulation) | BOOL | This parameter describes whether the sent message needs UDP encapsulation. |

**Table 4 rsvconf signal parameters**

| **Parameter** | **Data Type** | **Content** |
|---|---|---|
| (1) session | String | This parameter describes the SESSION field of the ResvConf message, and its contents include the destination IP address of the data stream, and the protocol type. |
| (2) errorspec (error parameter) | String | This parameter describes the ERROR_SPEC field of the ResvConf message. Its contents include the IP address of the node where the error occurs. |
| (3) style (reservation style) | enum | This parameter describes the STYLE field of the ResvConf message. Its contents include three styles: FF, SE and WF. This parameter is described through an enumerated data type. |
| (6) rsvconf (resource reservation confirmation) | String | This parameter describes the RESV_CONFIRM field of the ResvConf message, and its content is a copy of the RESV_CONFIRM field of the Resv message that triggers this ResvConf message. |
| (7) fdl (flow descriptor list) | String | This parameter describes the flow descriptor list field of the ResvConf message. The value of the content of this field varies with the reservation style. This parameter describes the content of the flow descriptor list as an entirety. Alternatively, many parameters may describe the contents of this parameter respectively. |
| (8) source (source address) | String | This parameter describes the source address of the ResvConf message. If the destination address is not specified, the MG may use the destination address in the session property. |
| (9) dest (destination address) | String | This parameter describes the destination address of the ResvConf message. This address may be obtained from the RESV_CONFIRM field, or a separate parameter is defined to indicate the destination address. |
| (10) udp (UDP encapsulation) | BOOL | This parameter describes whether the sent message needs UDP encapsulation. |

**Table 5 Parameters reported in an rvp event**

| **Parameter** | **Data Type** | **Content** |
|---|---|---|
| (1) msgtype (message type) | enum | This parameter is adapted to detect the type of the reported RSVP message, for example, Resv, ResvTear, and PathErr. |
| (2) session | String | This parameter describes the SESSION field of the received RSVP message, and its contents include the destination IP address of the data stream, and the protocol type. |
| (3) rvphop(next hop) | String | This parameter describes the RSVP_HOP field of the RSVP message, and its contents include the address of the next hop. The next hop refers to the next hop in the data stream direction. |
| (4) timevalues (refresh period) | String | This parameter describes the TIME_VALUES field of the RSVP message, and its contents include the value of the refresh period R. |
| (5) policydata (policy data) | String | This parameter describes the POLICY_DATA field of the RSVP message. |
| (6) rsvconf (resource reservation confirmation) | String | This parameter describes the RESV_CONFIRM field of the Resv message, and its content is the IP address of the receiver of the ResvConf message. |
| (7) scope | String | This parameter describes the SCOPE field of the RSVP message. Its content is a sender address list. |
| (8) style (reservation style) | enum | This parameter describes the STYLE field of the RSVP message. Its contents include three styles: FF, SE, and WF. This parameter is described through an enumerated data type. |
| (9) fdl (flow descriptor list) | String | This parameter describes the flow descriptor list field of the RSVP message. The value of the content of this field varies with the reservation style. This parameter describes the content of the flow descriptor list as an entirety. Alternatively, many parameters may describe the contents of this parameter respectively |
| (10) errorspec (error parameter) | String | This parameter describes the ERROR_SPEC field of the PathErr message. Its contents include: the error that occurs, and the IP address of the node where the error occurs. |
| (11) sendertemplate (sender template) | String | This parameter describes the SENDER_TEMPLATE field of the PathErr message. Its contents include the sender address information. This field is part of the sender descriptor field. |
| (12) sendertspec (sender parameter) | String | This parameter describes the SENDER_TSPEC field of the PathErr message. Its contents include the transmission features of the sent data stream This field is part of the sender descriptor field. |
| (13) adspec (advertisement parameter) | String | This parameter describes the ADSPEC field of the PathErr message. Its contents include OPWA data. This field is an optional part of the sender descriptor field. |
| (14) source (source address) | String | This parameter describes the source address of the received REVP message. |
| (15) udp (UDP encapsulation or not) | BOOL | This parameter indicates whether the detected RSVP message is encapsulated through UDP. |

### Embodiment 2

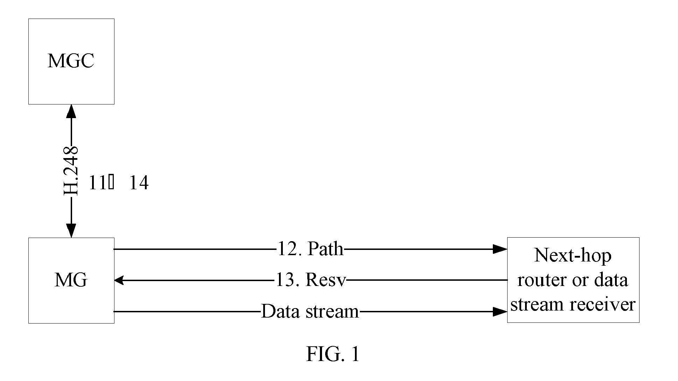

Through the extended protocol in the first embodiment, the MG can set up and tear down a bearer path, and reserve and release resources under control of the MGC. As shown in FIG. 1, a process of reserving resources includes the following steps:
Step 11: As a sender, when the MGC set up a resource reservation path (for example, after the media capability is negotiated between the sender and the receiver of the data stream through call signaling, it is necessary to set up a bearer path between the sender and the receiver of the data stream and reserve the relevant resources), the MGC sends an H.248 pth signal to the MG. The parameter of the pth signal may indicate the content of the path message. The parameters of the pth signal are shown in Table 1.
Step 12: After receiving the pth signal, the MG may construct an RSVP Path message, for example, write the content of the SESSION object of the Path message through the value of the session property, and write the content of the TIME_VALUES object of the Path message through the timevalues property. The MG sends the RSVP Path message to the next-hop router until the data stream receiver. In the process of sending the Path message, the node that receives the Path message sets up a bearer path, and then forwards the Path message to the next router.

After receiving the pth signal, the MG may construct an RSVP Path message, and then forward the Path message to the next router.
Step 13: The data stream receiver reserves the resources (such as a bandwidth) of the QoS parameters as requested. The data stream receiver sends an RSVP Resv message. After reserving the resource successfully, each node along the route forwards the Resv message to the upstream node. The forwarded Resv message may differ from the Resv message received from the downstream node. Many reasons lead to the difference, for example, the traffic control mechanism of the node. In this way, the stream parameter may be modified hop by hop. Alternatively, the RSVP Resv request messages are combined in the case of multicast. The RSVP Resv message includes the filter parameter and the stream parameter in the stream descriptor for describing the QoS.
Step 14: After the RSVP Resv message arrives at the MG, the MG reports the message to the MGC through an rvp event of a Notify message in the H.248 protocol (this event is preset on the MG by the MGC; or this event is a permanent event, and the MG detects it automatically). The parameters of the rvp event of the Notify message in the H.248 protocol carry some or all information in the RSVP Resv message. The MG may reserve the data stream resources on different occasions, for example, reserve the resources before sending the Path message, or between sending the Path message and receiving the RSVP Resv message, or after receiving the Resv message. According to the remaining resources of the MG, subscription information, QoS information in the received Resv message, and the policy decision made by other control units, the MGC controls the MG to decide whether to accept the resource reservation. If the resource reservation is accepted, the MGC sends an H.248 rsvconf signal to the MG, instructing the MG to send an RSVP ResvConf message to the data stream receiver, or the MG directly sends an RSVP ResvConf message to the data stream receiver without receiving the signal. If the resource reservation is rejected, the MGC sends an H.248 rsverr signal to the MG, instructing the MG to send an RSVP ResvErr message to the data stream receiver, or the MG directly sends an RSVP ResvErr message to the data stream receiver without receiving the signal.

In some cases, to speed up the response and reduce the system load, the MG may reserve resources according to its own information (or the resources are already reserved before the Resv message is received), and makes a ResvConf response to the RSVP Resv message automatically.

If an error occurs on the route of the Path message (for example, on a router), the network entity (such as a router) where the error occurs returns an RSVP PathErr message to the MG. After receiving the RSVP PathErr message, the MG reports some or all information in the message to the MGC through an H.248 rvp event, indicating the reservation failure. After receiving the event, the MGC performs subsequent operations, for example, tears down the call.

When the data stream stops (for example, when the data stream receiver leaves the multicast group), the MGC sends an H.248 ptht signal to the MG, instructing the MG to tear down the path. Afterward, the MG sends an RSVP PathTear message to the data stream receiver. Accordingly, the routers and receivers on the route tear down the path and release the relevant resources.

When expecting release of the reserved resources, the receiver or intermediate node sends an RSVP ResvTear message to the MG. The MG receives the RSVP ResvTear message, and reports it to the MGC through an rvp event. The parameter of the reported event carries some or all information in the RSVP ResvTear message. This message requires the routers and senders on the route to release the relevant resources. The MGC knows that the bearer resources have been released, and performs subsequent operations such as releasing the call.

### Embodiment 3

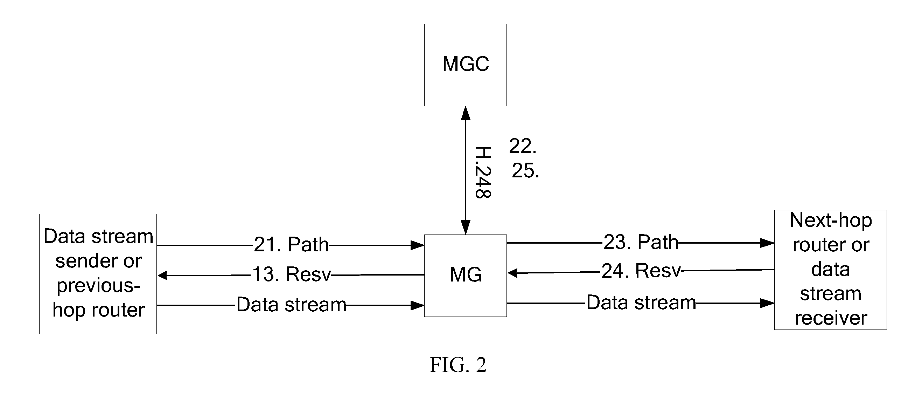

FIG. 2 shows an MGC serving as an intermediate node for setting up a resource reservation path. The process includes the following steps:
Step 21: The MG receives an RSVP Path message, and reports the content of the RSVP Path message to the MGC through an extended H.248 event.
Step 22: The MGC sends a pth signal to the MG. The parameters of the pth signal may indicate the content of the path message. The parameters of the pth signal are shown in Table 1.
Step 23: After receiving the H.248 pth signal, the MG may construct an RSVP Path message, for example, write the content of the SESSION object of the Path message through the value of the session property, and write the content of the TIME_VALUES object of the Path message through the timevalues property. As instructed, the MG sends the RSVP Path message to the next-hop router until the data stream receiver. In the process of sending the Path message, the node that receives the Path message handles the message, and then forwards the Path message to the next router.

After receiving the pth signal, the MG may construct an RSVP Path message, and then forward the Path message to the next router.

Step 24: The data stream receiver reserves the resources of the QoS parameters as requested. The data stream receiver sends an RSVP Resv message. After reserving the resource successfully, each node along the route forwards the Resv message to the upstream node. The forwarded Resv message may differ from the Resv message received from the downstream node. Many reasons lead to the difference, for example, the traffic control mechanism of the node. In this way, the stream parameter may be modified hop by hop. Alternatively, the RSVP Resv request messages are combined in the case of multicast. The RSVP Resv message includes the filter parameter and the stream parameter in the stream descriptor for describing QoS parameters.

Step 25: After the RSVP Resv message arrives at the MG, the MG reports the message to the MGC through an rvp event of a Notify message in the H.248 protocol (this event is preset on the MG by the MGC; or this event is a permanent event, and the MG detects it automatically). The parameters of the rvp event of the Notify message in the H.248 protocol carry some or all information in the RSVP Resv message. The MG may reserve the data stream resources on different occasions, for example, reserve the resources before sending the Path message, or between sending the Path message and receiving the RSVP Resv message, or after receiving the Resv message. According to the remaining resources of the MG, subscription information, QoS information in the received Resv message, and the policy decision made by other control units, the MGC controls the MG whether to accept the resource reservation. If the resource reservation is accepted, the MGC instructs the MG to send an RSVP Resv message to the upstream node. If the resource reservation is rejected, the MGC sends an H.248 resverr message to the MG, instructing the MG to send an RSVP ResvErr message to the data stream receiver.

If an error occurs in the process of sending the Path message, an RSVP PathErr message is returned to the MG. After receiving the RSVP PathErr message, the MG reports some or all information in the message to the MGC through an H.248 rvp event, indicating the reservation failure. The MGC instructs the MG to go on sending the RSVP PathErr message to the upstream node.

When the data stream stops or the MG receives an RSVP PathTear message from the upstream node, the MGC sends an H.248 ptht signal to the MG, instructing the MG to tear down the path. Afterward, the MG sends an RSVP PathTear message to the data stream receiver. Accordingly, the routers and receivers on the route tear down the path and release the relevant resources.

When requiring release of the reserved resources, the receiver or intermediate node sends an RSVP ResvTear message to the MG. The MG receives the RSVP ResvTear message, and reports it to the MGC through an rvp event. The parameter of the reported event carries some or all information in the RSVP ResvTear message. This message requires the routers and senders on the route to release the relevant resources. The MGC instructs the MG to release resources and send an RSVP ResvTear message to the upstream node. In this way, the resources of the upstream node are released.

### Embodiment 4

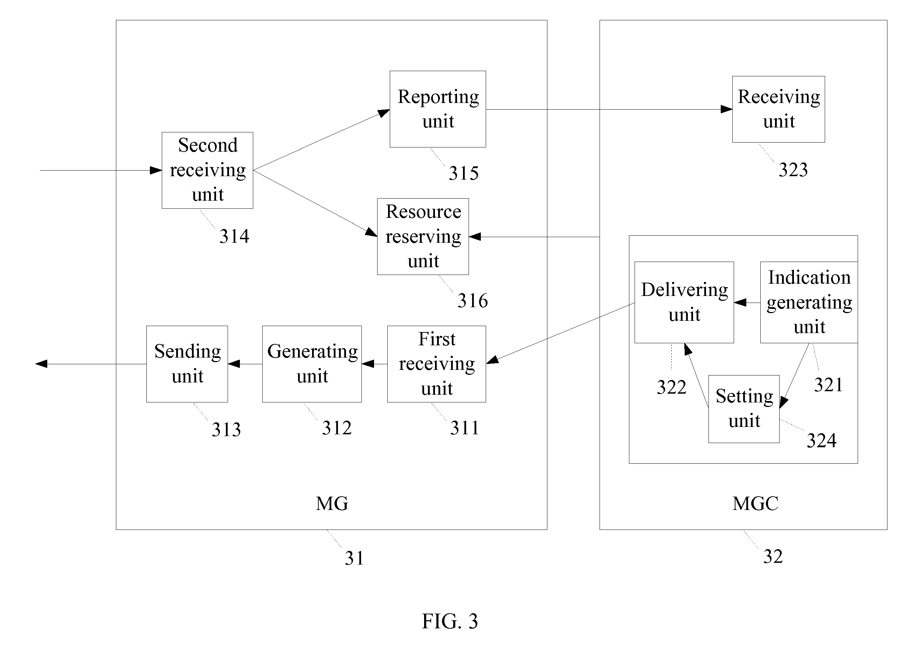

As shown in FIG. 3, a resource reservation system provided in an embodiment of the present invention includes an MG 31 and an MGC 32.

The MG 31 is adapted to: receive an indication from the MGC 32, and construct a first RSVP message and send the RSVP message to a data stream receiver according to the indication. An example of the first RSVP message is an RSVP Path message which is adapted to set up a bearer path between the MG 31 and the data stream receiver. The MG 31 may further receive a second RSVP message, and report the information in the second RSVP message to the MGC 32 through a preset event. An example of the second RSVP message is an RSVP resource reservation message. The MG 31 includes: a first receiving unit 311, adapted to receive an indication from an MGC 32, where the indication instructs a sending unit 313 to send a first RSVP message to a data stream receiver; a generating unit 312, adapted to generate the first RSVP message according to the indication received by the first receiving unit 311; the sending unit 313, adapted to send the first RSVP message generated by the generating unit 312 to the data stream receiver, where the first RSVP message may be an RSVP Path message which is adapted to set up a bearer path between the MG 31 and the data stream receiver; a second receiving unit 314, adapted to receive a second RSVP message; a reporting unit 315, adapted to report information in the second RSVP message received by the second receiving unit 314 to the MGC 32 through an event, where the second RSVP message may be an RSVP resource reservation request message; and a resource reserving unit 316, adapted to reserve resources according to the first RSVP message generated by the generating unit 312 or according to the second RSVP message received by the second receiving unit 314, where the occasion of reservation is described in step 14 and step 25.

The MGC 32 is adapted to: deliver an indication that instructs the MG 31 to send the first RSVP message to the data stream receiver; and receive the event reported by the MG 31, where the event carries information in the second RSVP message received by the MG 31. The MGC 32 includes: an indication generating unit 321, adapted to generate an indication, where the indication includes an H.248 signal and/or a property and instructs the MG 31 to send the first RSVP message to the data stream receiver; a delivering unit 322, adapted to deliver the indication generated by the indication generating unit 321 to the MG 31; a receiving unit 323, adapted to receive an event reported by the MG 31, where the event carries information in the second RSVP message received by the MG 31; and a setting unit 324, adapted to set the information in the RSVP message into the indication generated by the generating unit 321, where the indication carries a signal parameter and/or a property.

In the embodiments of the present invention, the media gateway control protocol is extended. That is, the MG 31 receives the indication from the MGC 32, and reports information in the received second RSVP message to the MGC 32. Therefore, the bearer path can be set up and torn down; the resources on the bearer path can be reserved and released; the transmission quality of media streams sent by the MG 31 in the IP transport network is ensured; the user's requirements for the QoS of the service streams corresponding to the media streams are fulfilled; and the application scope of the MGC 32 and the MG 31 is expanded.

Although the invention has been described through several exemplary embodiments, the invention is not limited to such embodiments. It is apparent that those skilled in the art can make modifications and variations to the invention without departing from the scope of the invention. The invention is intended to cover the modifications and variations provided that they fall in the scope of protection defined by the following claims or their equivalents.

## Claims

1. A resource reservation method, comprising:
by a Media Gateway (MG), receiving an indication from a Media Gateway Controller (MGC), wherein the indication instructs the MG to send a first Resource Reservation Protocol (RSVP) message to a data stream receiver; and
constructing the first RSVP message according to the indication, and sending the RSVP message to the data stream receiver.

2. The method of claim 1, wherein the first RSVP message comprises one of the following messages:
an RSVP Path message, adapted to initiate setting up of a data stream path and carry Quality of Service (QoS) information;
an RSVP PathTear message, adapted to tear down a path and release resources;
an RSVP ResvConf message, adapted to confirm a resource reservation request message;
an RSVP ResvErr message, adapted to notify the data stream receiver that resource reservation fails.

3. The method of claim 1, wherein:
when data stream transmission stops, the method further comprises: by the MG, receiving the indication from the MGC, and sending a PathTear message to the media stream receiver.

4. The method of claim 1, further comprising:
by the MG, receiving a second RSVP message, and reporting information in the second RSVP message to the MGC through a preset event.

5. The method of claim 4, wherein:
the preset event is preset on the MG by the MGC, or the preset event is a permanent event, and the preset event is adapted to detect the received second RSVP message.

6. The method of claim 4, wherein the second RSVP message comprises one of the following messages:
an RSVP resource reservation request message, sent from the data stream receiver or an intermediate node, and adapted to perform resource reservation actions on each node;
an RSVP ResvTear message, adapted to release resources reserved through the resource reservation request message;
an RSVP PathErr message, adapted to notify a data stream sender that path setting up fails.

7. The method of claim 6, wherein when the second RSVP message is an RSVP resource reservation request message, the method further comprises:
by the MGC, controlling the MG to decide whether to accept resource reservation, and sending a ResvConf message to the data stream receiver if the resource reservation is accepted, or sending a ResvErr message to the data stream receiver if the resource reservation is rejected.

8. The method of claim 7, wherein the step sending, by the MG, the ResvConf message to the data stream receiver comprises:
by the MG, sending the ResvConf message to the data stream receiver directly;
or
by the MGC, instructing the MG to send the ResvConf message to the data stream receiver.

9. The method of claim 7, wherein the step of the MG sending the ResvErr message to the data stream receiver comprises:
by the MG, sending the ResvErr message to the data stream receiver directly;
or
by the MGC, instructing the MG to send the ResvErr message to the data stream receiver.

10. The method of claim 1, wherein:
the MG receives the indication from the MGC through a signal and/or a property.

11. The method of any one of claims 1-10, wherein:
the MG uses a signal parameter and/or a property to receive information in the first RSVP message as instructed by the MGC.

12. The method of claim 11, wherein:
the MG reports the information in the second RSVP message to the MGC through event parameters.

13. A resource reservation system, comprising:
a Media Gateway (MG), adapted to: receive an indication from a Media Gateway Controller (MGC), construct a first Resource Reservation Protocol (RSVP) message according to the indication, and send the RSVP message to a data stream receiver; receive a second RSVP message, and report information in the second RSVP message to the MGC through a preset event; and
the MGC, adapted to: deliver an indication to the MG, wherein the indication instructs the MG to send the first RSVP message to the data stream receiver; and receive the event reported by the MG, wherein the event carries the information in the second RSVP message received by the MG.

14. A Media Gateway (MG), comprising:
a first receiving unit, adapted to receive an indication from a Media Gateway Controller (MGC), wherein the indication instructs a sending unit to send a first Resource Reservation Protocol (RSVP) message to a data stream receiver;
a generating unit, adapted to generate the first RSVP message according to the indication received by the first receiving unit; and
the sending unit, adapted to send the first RSVP message generated by the generating unit to the data stream receiver.

15. The MG of claim 14, further comprising:
a second receiving unit, adapted to receive a second RSVP message; and
a reporting unit, adapted to report information in the second RSVP message received by the second receiving unit to the MGC through an event.

16. The MG of claim 14 or claim 15, further comprising:
a resource reserving unit, adapted to reserve resources according to the first RSVP message generated by the generating unit or according to the second RSVP message received by the second receiving unit.

17. A Media Gateway Controller (MGC), comprising:
an indication generating unit, adapted to generate an indication that carries an H.248 signal and/or a property and instructs a Media Gateway to send a first Resource Reservation Protocol (RSVP) message to a data stream receiver; and
a delivering unit, adapted to deliver the indication generated by the indication generating unit to the MG.

18. The MGC of claim 17, further comprising:
a receiving unit, adapted to receive an event reported by the MG, wherein the event carries information in a second RSVP message received by the MG.

19. The MGC of claim 18, further comprising:
a setting unit, adapted to set the information in the RSVP message into the indication generated by the generating unit, wherein the indication carries a signal parameter and/or a property.
